# FASCICULE DE BREVET EUROPEEN

(11) **EP 0 351 277 B1**
(45) Date de publication et mention de la délivrance du brevet: **21.07.1993**
(21) Numéro de dépôt: 89401859.7
(22) Date de dépôt: 29.06.1989
(51) Int. Cl.: F41A 25/02, F16F 9/32

(54) **Dispositif d'étanchéité entre les organes mobiles d'un frein de recul d'artillerie**
Dichtungseinrichtung zwischen den beweglichen Teilen einer Geschützrücklaufbremse
Sealing device between the movable parts of an artillery recoil brake

(30) Priorité: 30.06.1988 FR 8808804
(43) Date de publication de la demande: 17.01.1990
(73) Titulaire: GIAT Industries, F-78034 Versailles Cédex (FR)
(72) Inventeur: Relange, Dominique, F-18000 Bourges (FR)
(74) Mandataire: Célanie, Christian

(56) Documents cités:
- DE-A- 2 715 826
- DE-A- 2 905 928
- FR-A- 879 222
- FR-A- 1 198 818
- FR-A- 1 522 274
- US-A- 4 038 905
- US-A- 4 360 085

## Description

Le secteur technique de la présente invention est celui des dispositifs d'étanchéité au niveau des organes mobiles des freins de recul d'artillerie.

De manière connue, un canon d'artillerie comporte:
- une masse reculante, constituée essentiellement par l'ensemble tube-culasse,
- un frein de recul, interposé entre la masse reculante et l'affût du canon dont le fonctionnement est dans la plupart des cas hydraulique,
- un remplisseur destiné à pallier les éventuelles fuites de fluide pouvant apparaître dans le frein, et à maintenir l'ensemble au repos sous une pression constante, généralement de l'ordre de quelques bars.
- un récupérateur, chargé d'emmagasiner une partie de l'énergie de recul et de la restituer ensuite à l'ensemble mobile pour le ramener en batterie, prêt pour un nouveau tir,

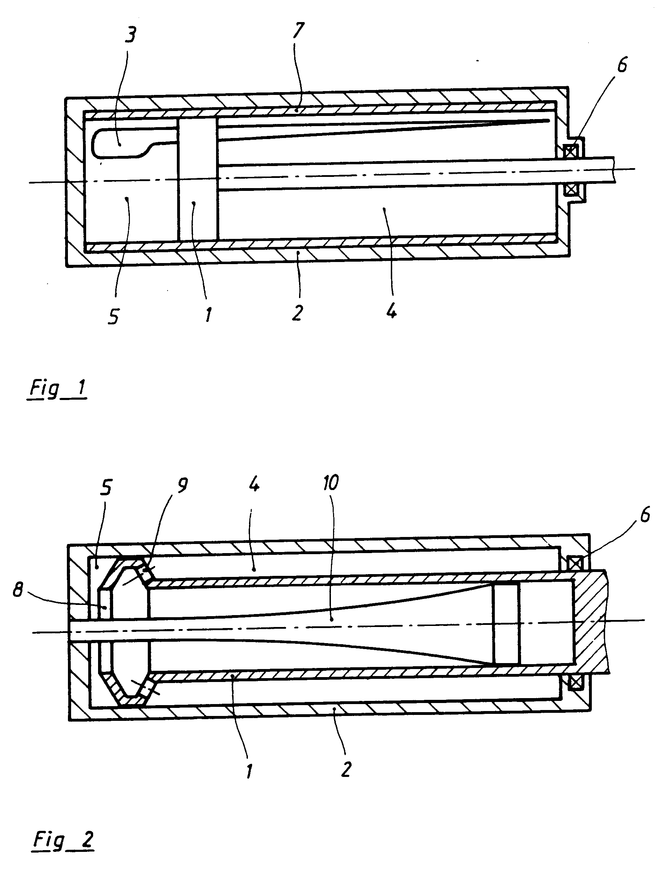

On connaît ainsi plusieurs principes de fonctionnement de freins de recul hydrauliques. Les plus couramment utilisés sont:
- les freins à fourrure (fig 1)
- les freins à contre-tige (fig 2).

Dans les deux cas ces freins présentent un piston 1 coulissant a l'intérieur d'un cylindre 2, qui est rempli par un fluide (le plus souvent de l'huile). Le piston définit ainsi à l'intérieur du cylindre une chambre 4 annulaire et une chambre 5, que nous appellerons respectivement chambre haute pression et chambre basse pression.

Le fluide est destiné à freiner le mouvement relatif piston/cylindre, l'intensité du freinage est une fonction de la géométrie d'un moyen de communication entre les chambres haute et basse pressions. L'étanchéité du cylindre au niveau de la sortie du piston est assurée par un joint 6.

Dans le cas d'un frein dit à fourrure (fig 1), le moyen de communication est constitué par une lumière 3 de section variable pratiquée dans une chemise 7 disposée dans le cylindre, cette chemise est appelée fourrure.

Dans le cas d'un frein dit à contre-tige (fig 2), le moyen de communication est constitué par la combinaison des orifices 8 et 9 de géométrie constante et d'une contre-tige 10 de diamètre variable. Cette contre-tige, en venant plus ou moins obturer l'orifice 8, fait varier la section de passage de l'huile entre les deux chambres et donc l'intensité du freinage.

Piston et cylindre peuvent être, selon les cas, soit solidaires du berceau ou de la glissière, soit solidaires de la masse reculante du canon. Le calibrage de la section de passage d'huile entre les deux chambres et donc l'intensité du freinage est une fonction de la distance de recul, pendant le temps de parcours du projectile dans le tube, on cherche à avoir un effort de freinage quasi nul, cela afin de ne pas engendrer d'efforts sur la masse mobile susceptibles de nuire à la précision du tir. Cette phase est dite "de recul libre".

La variation de la section du passage de l'huile va ensuite permettre d'obtenir une décélération progressive, cette décélération sera accompagnée d'une montée en pression dans la chambre 4 d'autant plus intense que la distance de recul autorisée sera plus réduite. Un frein de ce type est décrit dans le brevet FR-A-879 222.

Le brevet FR-A-1 198 818 décrit un amortisseur dans lequel le joint d'étanchéité ne comporte, en amont, aucun moyen de récupération de l'huile traversant ledit joint.

Le brevet US-A-4 360 085 décrit un frein hydraulique pour canon. Ce frein est prévu autour du canon en délimitant des chambres renfermant le fluide, séparées par un piston. Un passage calibré est prévu entre le piston et le cylindre. Lorsque le canon recule, le fluide passe de la chambre arrière à la chambre avant et un système de canalisations est prévu d'une part côté chambre avant et d'autre part côté chambre arrière. Il n'existe pas des moyens de récupération du fluide traversant ce joint.

Le brevet FR-A-1 522 274 décrit un dispositif d'étanchéité pour circuit hydraulique comprenant un circuit d'évacuation de l'huile lubrifiant un joint haute-pression . Ce circuit est constitué par une gorge annulaire, un canal , une chambre, un raccord et un réservoir. Ce dispositif présente une certaine analogie avec le dispositif selon l'invention en ce qu'il comporte des moyens de récupération de l'huile franchissant le joint haute-pression. Toutefois, les moyens de récupération sont reliés au réservoir et il n'y a donc pas de liaison directe avec la chambre basse pression.

Le brevet US-A-4 038 905 concerne un frein disposé autour du canon comprenant un cylindre délimitant avec un piston une chambre fermée par des joints. Le piston entoure le canon et les forces de recul sont absorbées au niveau du fluide de la chambre unique.

Un problème commun à ces types de freins réside dans la difficulté du choix des joints d'étanchéité. En effet, ces derniers doivent supporter des contraintes de pression très sévères, de l'ordre de 400 bars, alliées à une vitesse de déplacement de tige pouvant atteindre 20 m/s, dans des conditions de température allant de -30°C à +55°C.

Peu de joints du commerce répondent à de telles spécifications, ce qui a pour conséquence de limiter le choix et d'augmenter les coûts.

Par ailleurs, sachant que l'effort de freinage peut se traduire par la formule F=P.S dans laquelle P est la pression maximale dans la chambre et S la section active du piston 1, on voit que, si on est amené à augmenter la valeur de l'effort de recul à absorber, la pression maximale admissible étant limitée, on est alors contraint d'augmenter le diamètre du frein. A l'inverse, il sera intéressant de pouvoir diminuer ce diamètre sans pour autant augmenter la pression s'exerçant sur le joint, ce qui permettra de réduire la masse et l'encombrement du frein.

De même, à diamètre constant, une réduction de cette pression permettra l'emploi de joints de qualité courante, peu coûteux et faciles à approvisionner ou à remplacer.

C'est le but de la présente invention que de proposer un dispositif d'étanchéité permettant de pallier les inconvénients précités.

Ainsi l'invention a pour objet un dispositif d'étanchéité entre une tige de piston, reliée à la masse reculante ou à l'affut du canon , et un cylindre, relié à l'affut ou à la masse reculante , d'un frein de recul d'artillerie, le piston coulissant dans le cylindre contenant un fluide et délimitant dans celui-ci une chambre haute pression et une chambre basse pression, chambres dont les volumes variables respectifs sont déterminés par la position relative piston/cylindre, caractérisé en ce qu'il comprend une chambre dite moyenne pression, traversée par la tige du piston et qui communique avec la chambre haute pression par un canal sensiblement annulaire entourant la tige du piston, et en ce que la chambre moyenne pression est reliée directement à la chambre basse pression par un conduit dont la section est supérieure à celle du canal annulaire, pour assurer un écoulement du fluide recueilli dans la chambre moyenne pression vers la chambre basse pression.

La section du conduit est de préférence comprise entre 5 et 20 fois la section du canal annulaire.

Selon un mode préféré de réalisation, les chambres haute et moyenne pressions sont séparées par une cloison, percée par un alésage laissant passer la tige du piston, le canal étant constitué par le jeu entre cette dernière et l'alésage, la surface de la section annulaire du canal étant comprise entre 0,05% et 0,4% de la section active de la chambre haute pression

Selon des variantes de réalisation, l'alésage comprend au moins une gorge annulaire, une bague de friction pouvant être disposée dans une des gorges de l'alésage.

Dans le cas d'un frein de recul utilisant un dispositif d'étanchéité selon l'invention et comportant un remplisseur, ce dernier pourra être raccordé à la chambre moyenne pression, et éventuellement également à la chambre basse pression.

L' invention sera mieux comprise à la lecture de la description qui va suivre de modes particuliers de réalisation, description faite en regard des dessins annexés, et dans lesquels:
- les figures 1 et 2 sont respectivement des coupes axiales simplifiées d'un frein à fourrure et d'un frein à contre-tige selon l'état de la technique,
- la figure 3 est une représentation simplifiée d'un frein à fourrure utilisant le dispositif d'étanchéité selon l'invention,
- les figures 4 et 5 représentent deux variantes de réalisation du dispositif d'étanchéité selon l'invention,
- la figure 6 montre les variations de pression au niveau des chambres haute et moyenne pression en fonction du temps,
- les figures 7 à 9 sont des schémas de diverses organisations possibles de freins utilisant le dispositif d'étanchéité selon l'invention.

Dans les descriptions qui vont suivre, nous nous limiterons volontairement à l'exemple d'un frein à fourrure, néanmoins, tous les concepts qui vont être évoqués peuvent parfaitement s'appliquer à d'autres types de freins, en particulier à contre-tige.

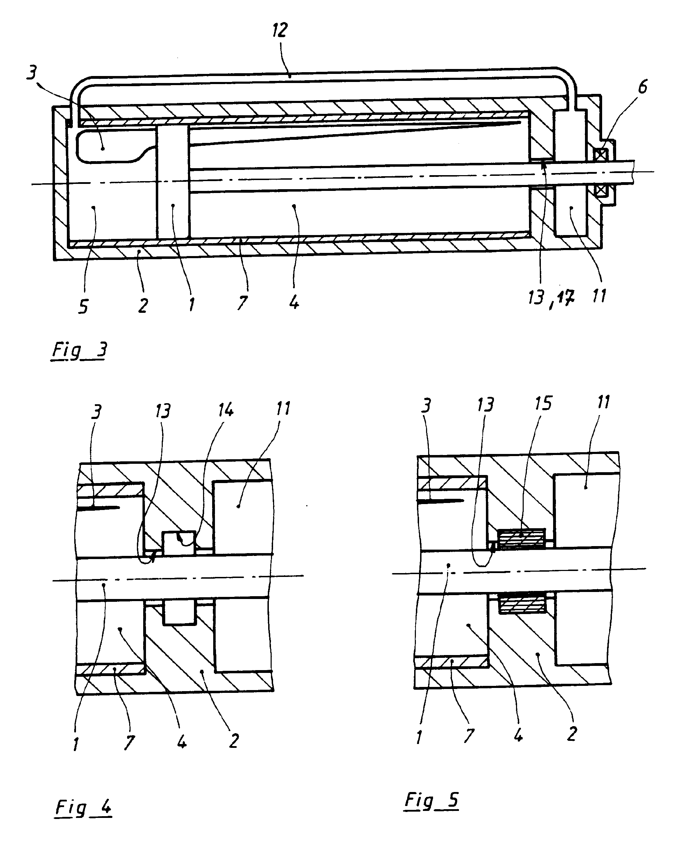

Le dispositif représenté par la figure 3 est un frein de recul du type "à fourrure", analogue à celui représenté par la figure 1 qui a déjà été décrite dans le préambule. Il comporte un dispositif d'étanchéité constitué par une chambre 11, dite chambre moyenne pression, qui est contiguë à la chambre haute pression 4, et qui est raccordée à la chambre basse pression 5 par un conduit 12.

Les chambres haute et moyenne pression sont séparées par une cloison qui est percée d'un alésage 13 laissant passer la tige du piston 1. Le jeu annulaire entre la tige de piston et l'alésage constitue un canal (17) faisant communiquer ces deux chambres.

La section annulaire de ce canal sera comprise de préférence entre 0,05% et 0,4% de la section active (surface annulaire sur laquelle agit le piston) de la chambre haute pression, de façon à obtenir un abaissement suffisant de la pression entre les chambres 4 et 11, tout en conservant une pression suffisante dans la chambre 4 pour assurer un freinage correct.

Afin de limiter la pression dans la chambre moyenne pression 11, la section du conduit 12 sera supérieure à celle du canal 17 et de préférence de l'ordre de 5 à 20 fois la valeur de cette dernière.

Le fonctionnement du dispositif est le suivant:

Au repos, comme cela a déjà été précisé dans le préambule, il règne à l'intérieur des trois chambres une pression de l'ordre de quelques bars qui est maintenue à ce niveau par un remplisseur conventionnel, non représenté, qui est raccordé de façon connue à la chambre basse pression.

Au moment du tir, la translation rapide du piston 1 dans le cylindre 2 provoque une augmentation de la pression dans la chambre 4, (le débit engendré par le déplacement du piston devant passer par la lumière 3 de la fourrure 7), la pression dans la chambre 5 devient dans le même temps pratiquement nulle en raison de l'accroissement du volume de cette dernière provoqué par le déplacement du piston 1.

Il se crée alors, d'une part un écoulement d'huile de la chambre haute pression 4 vers la chambre moyenne pression 11, écoulement dont on peut calibrer le débit par le dimensionnement du jeu entre l'alésage 13 et la tige du piston, et d'autre part un écoulement d'huile de la chambre moyenne pression 11 vers la chambre basse pression 5 au travers du conduit 12.

La section du conduit 12 étant supérieure à celle du canal annulaire, ce dernier écoulement a pour effet de limiter la valeur de la pression dans la chambre moyenne pression 11, et donc la pression qui s'exerce sur le joint 6.

Il est possible d'ajuster la valeur de la perte de charge entre les chambres haute et moyenne pression en jouant sur la valeur de la section du canal annulaire reliant ces deux chambres, et donc d'amener la valeur de la pression maximale régnant dans la chambre moyenne pression à une valeur admissible pour le joint d'étanchéité 6.

Ainsi on a essayé un frein équipé d'un tel dispositif d'étanchéité et dont les principales caractéristiques étaient les suivantes:
- section active du piston 1:: 7368mm²
- volume maximal de chamabre 4:: 3,6 l
- section du canal annulaire:: 14 mm²
- volume de la chambre 11:: 0.005 l
- section du conduit 12:: 177 mm²

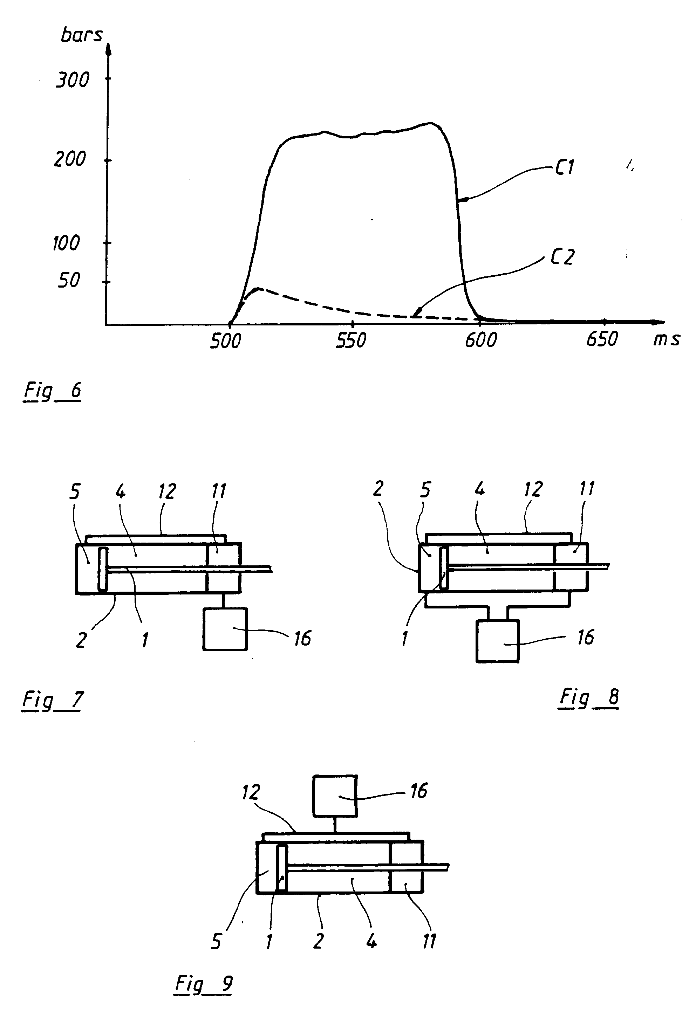

Les courbes C1 et C2 de la figure 6 donnent respectivement les pressions dans les chambres 4 et 11 en fonction du temps, l'instant 0 correspondant à la mise à feu de la charge propulsive du projectile. On constate que la pression moyenne dans la chambre 4 s'établit à une valeur proche de 200 bars alors que dans la chambre 11 on observe un pic à 40 bars suivi d'une chute rapide au-dessous de 10 bars.

D'autres variantes sont possibles qui permettent d'augmenter encore la perte de charge entre les chambres 4 et 11.

Ainsi sur la Figure 4 on a disposé une gorge annulaire 14 dans l'alésage 13. Cette gorge constitue une chambre supplémentaire provoquant une première perte de charge. En jouant sur le nombre et les dimensions de ces gorges 14, il est possible de moduler la perte de charge globale.

La Figure 5 montre une autre variante dans laquelle on a disposé une bague de friction 15 dans une gorge annulaire de l'alésage 13. Une telle disposition permet d'ajuster de façon plus précise la valeur de la section annulaire du canal reliant les chambres haute et moyenne pression. Il devient alors possible de donner une valeur réduite à cette section sans pour autant pénaliser le fonctionnement mécanique du frein, les efforts de frottement pouvant être compensés par le choix d'un matériau anti friction pour la réalisation de cette bague qui pourra en outre être remplacée en cas d'usure excessive.

Il sera naturellement possible de disposer dans l'alésage 13 à la fois des gorges annulaires 14 et une bague de friction 15.

De façon habituelle, un remplisseur 16 est raccordé au frein au niveau de la chambre basse pression 5. Cette disposition autorise une pression de remplissage minimale et met le remplisseur à l'abri des hautes pressions.

L'utilisation du dispositif d'étanchéité selon l'invention autorise d'autres types de raccordement.

Ainsi il est possible de raccorder le remplisseur 16 à la chambre moyenne pression 11 (voir Figure 7).

Il est possible également de raccorder le remplisseur 16 à la fois à la chambre basse pression 5 et à la chambre moyenne pression 11, cela par des canalisations séparées (Figure 8) ou bien par l'intermédiaire du conduit 12 (Figure 9).

Ces deux modes de raccordement permettent de faciliter l'intégration de l'invention dans différents types de matériels.

## Revendications

1. Dispositif d'étanchéité entre une tige de piston, reliée à la masse reculante ou à l'affut du canon , et un cylindre, relié à l'affut ou à la masse reculante , d'un frein de recul d'artillerie, le piston coulissant dans le cylindre (2) contenant un fluide et délimitant dans celui-ci une chambre haute pression (4) et une chambre basse pression (5), chambres dont les volumes variables respectifs sont déterminés par la position relative piston/cylindre, ***caractérisé en ce qu'***il comprend une chambre dite moyenne pression (11), traversée par la tige du piston et qui communique avec la chambre haute pression par un canal (17) sensiblement annulaire entourant la tige du piston, et en ce que la chambre moyenne pression (11) est reliée directement à la chambre basse pression par un conduit (12) dont la section est supérieure à celle du canal annulaire, pour assurer un écoulement du fluide recueilli dans le chambre moyenne pression vers la chambre basse pression.

2. Dispositif selon la revendication 1, caractérisé en ce que la section du conduit (12) est comprise entre 5 et 20 fois la section du canal annulaire.

3. Dispositif selon la revendication 2, caractérisé en ce que les chambres haute et moyenne pressions sont séparées par une cloison, percée par un alésage (13) laissant passer la tige du piston (1), le canal (17) étant constitué par le jeu entre cette dernière et l'alésage (13), la surface de la section annulaire du canal étant comprise entre 0,05% et 0,4% de la section active de la chambre haute pression (4).

4. Dispositif selon la revendication 3, caractérisé en ce que l'alésage (13) comprend au moins une gorge annulaire (14).

5. Dispositif selon la revendication 4, caractérisé en ce qu'une bague de friction (15) est disposée dans une des gorges de l'alésage (13).

6. Frein de recul utilisant un dispositif d'étanchéité selon une des revendications 1 à 5 et comportant un remplisseur (16), caractérisé en ce que celui-ci est raccordé à la chambre moyenne pression (11).

7. Frein de recul selon la revendication 6, caractérisé en ce que le remplisseur (16) est raccordé à la chambre basse pression (5).

## Patentansprüche

1. Abdichtungsvorrichtung zwischen einer Kolbenstange, die mit der rückläufigen Masse oder mit der Rohrlafette verbunden ist und einem mit der Lafette oder der rückläufigen Masse verbundenen Zylinder, einer Rücklaufbremse für die Artillerie, wobei der im Zylinder (2) gleitende Kolben mit einer Flüssigkeit gefüllt ist und innerhalb des Zylinders eine Hochdruckkammer (4) von einer Niederdruckkammer (5) trennt, deren jeweiliges Volumen variabel ist und von der Stellung Kolben/Zylinder zueinander abhängt, wobei diese Vorrichtung dadurch gekennzeichnet ist, daß sie eine sogenannte Ausgleichskammer (11) besitzt, durch die die Kolbenstange läuft, und die über einen die Kolbenstange umgebenden, fast ringförmigen Kanal (17) mit der Hochdruckkammer verbunden ist, sowie dadurch, daß die Ausgleichskammer (11) über eine Leitung (12), deren Querschnitt größer ist als der des ringförmigen Kanals, direkt mit der Niederdruckkammer verbunden ist, um das Abfließen der in der Ausgleichskammer aufgefangenen Flüssigkeit zur Niederdruckkammer zu gewährleisten.

2. Abdichtungsvorrichtung nach Anspruch 1, dadurch gekennzeichnet, daß der Querschnitt der Leitung (12) 5 bis 20mal größer ist als der des ringförmigen Kanals.

3. Abdichtungsvorrichtung nach Anspruch 2, dadurch gekennzeichnet, daß die Hoch- und Niederdruckkammern durch eine Scheibe getrennt sind, die eine Bohrung (13) für die Stange des Kolbens (1) aufweist, wobei der Kanal (17) sich aus dem Spiel zwischen dieser Stange und der Bohrung (13) ergibt, während die Oberfläche des ringförmigen Kanalquerschnitts zwischen 0,05 % und 0,4 % des aktiven Querschnitts der Hochdruckkammer (4) beträgt.

4. Abdichtungsvorrichtung nach Anspruch 3, dadurch gekennzeichnet, daß die Bohrung (13) mindestens eine ringförmige Kerbe (14) aufweist.

5. Abdichtungsvorrichtung nach Anspruch 4, dadurch gekennzeichnet, daß in einer der Kerben der Bohrung (13) eine dickwandige Buchse (15) angebracht wird.

6. Rücklaufbremse mit einer Abdichtungsvorrichtung nach einem der Patentansprüche 1 bis 5 mit einem Überlaufgefäß (16), dadurch gekennzeichnet, daß es an die Ausgleichskammer (11) angeschlossen ist.

7. Rücklaufbremse nach Anspruch 6, dadurch gekennzeichnet, daß das Überlaufgefäß (16) an die Niederdruckkammer (5) angeschlossen ist.

## Claims

1. A sealing device between a piston rod, connected to the recoiling mass or the mount of a gun, and a cylinder, connected to the mount or to the recoiling mass, of an artillery recoil brake, with the piston mounted sliding in the cylinder (2), which contains a fluid, and separating in the cylinder a high-pressure chamber (4) from a low-pressure chamber (5), the variable volumes of which are determined by the relative position of the piston and cylinder, wherein the rod of the said piston passes through a medium-pressure chamber (11) and the said medium-pressure chamber communicates with the high-pressure chamber by a roughly annular channel (17) surrounding the piston rod, and wherein the said medium-pressure chamber (11) is linked directly to the low-pressure chamber by a pipe (12) whose section is greater than that of the annular channel, to provide a flow of the fluid gathered in the said medium-pressure chamber toward the said low-presure chamber.

2. A device as in claim 1, wherein the section of the pipe (12) is between five and twenty times the section of the said annular channel.

3. A device as in claim 2, wherein the high- and medium-pressure chambers are separated by a partition, drilled with a bore (13) allowing the piston rod (1) to pass through the partition, and wherein the channel consists of the clearance between the piston rod and the bore (13), and the annular sectional area of the channel is between 0.05 % and 0.4 % of the active section of the high pressure chamber (4).

4. A device as in claim 3, wherein the bore (15) includes at least one annular groove.

5. A device as in claim 4, wherein a friction ring (15) is arranged in one of the grooves of the bore.

6. Recoil brake using a sealing device according to one of claims 1 to 5, and including a filler (16), wherein the said filler is connected to the medium-pressure chamber (11).

7. Recoil brake as in claim 6, wherein the filler (16) is connected to the said low-pressure chamber (5).
